# EUROPEAN PATENT SPECIFICATION

(11) **EP 1 568 545 B1**
(45) Date of publication and mention of the grant of the patent: **10.10.2007**
(21) Application number: 05003325.7
(22) Date of filing: 16.02.2005
(51) Int. Cl.: B60R 21/16

(54) **Twin airbag apparatus**
Doppelairbagvorrichtung
Dispositif à deux airbags

(30) Priority: 24.02.2004 US 546963 P
(43) Date of publication of application: 31.08.2005
(73) Proprietor: TAKATA CORPORATION, Minato-ku, Tokyo 106-8510 (JP)
(72) Inventor: Kobayashi, Rie, C/O Takata Corp., Minato-Ku, Tokoy 106-8510 (JP)
(74) Representative: Vossius & Partner

(56) References cited:
- DE-A1- 19 712 511
- US-A- 5 435 594
- US-A1- 2003 116 945
- US-A1- 2004 232 681
- US-B1- 6 308 983
- PATENT ABSTRACTS OF JAPAN vol. 015, no. 168 (M-1107), 26 April 1991 (1991-04-26) -& JP 03 032956 A (MAZDA MOTOR CORP), 13 February 1991 (1991-02-13)

## Description

The invention relates to an airbag for protecting an occupant of a motor vehicle.

Conventional airbags are inflated by a gas generator to form a cushion for protecting a vehicle occupant from injuries in the event that the vehicle is involved in a crash, collision or other emergency situation. In order to offer the occupant adequate protection, airbag arrangements should correspond to the size and shape of the occupant. For example, protection of the occupant may be less than ideal if the airbag deploys when the occupant is of a particular size and shape (e.g., a small adult or child). Similarly, protection may be not ideal if the occupant is located outside of the normal seating position (i.e., Out Of Position or "OOP") when the airbag inflates.
US 2003/116945 A1 relates to a passenger protecting device for protecting a person in a vehicle and including an arm-protecting airbag to be inflated in front of an arm of an passenger, and a gas generator connected to the arm-protecting airbag for inflating the same. The arm-protecting airbag may be formed with a knee-bag, a driver airbag or passenger airbag.
JP 03 032956 A relates to an airbag device for an automobile which is divided into three portions. A single inflator is provided for concurrently supplying gas pressure to each portion.

Current safety systems may include sensing equipment for determining the type of occupant and the position of the occupant. Airbag deployment is adjusted based on the signal produced by the sensing equipment. However, many systems only provided for a gross adjustment. For example, if a small or lightweight adult is located in the seat, the airbag may be disabled. These systems typically only provide an "ON" or "OFF" condition of the airbag. The systems typically do not allow for the airbag(s) contained in the system to deploy at different levels in order to provide the appropriate amount of protection. Thus, there remains a need for an airbag arrangement and system that can be adjusted to accommodate a variety of different vehicle occupant types and positions.

According to an embodiment of the present invention, an airbag system is provided. The airbag system includes a twin airbag having left and right portions that are configured to deploy alongside a support airbag configured to deploy between the left and right portions of the twin airbag. The support airbag may deploy from an airbag module located in a steering wheel. The twin airbag may deploy from an airbag module positioned in an instrument panel of a vehicle. The support airbag and the twin airbag may deploy from the same airbag module.

It is to be understood that both the foregoing general description and the following detailed description are exemplary and explanatory only, and are not restrictive of the invention as claimed.

These and other features, aspects and advantages of the present invention will become apparent from the following description, appended claims, and the accompanying exemplary embodiments shown in the drawings, which are briefly described below.

Figure 1 is a top plan view of an airbag arrangement for a passenger side airbag according to an embodiment of the present invention.

Figure 2 is a top plan view of an airbag arrangement for a drive side airbag according to an embodiment of the present invention.

Figure 3 is a top plan view of an airbag module and airbag arrangement according to an embodiment of the present invention.

Figure 4 is a top plan view of an airbag module and airbag arrangement according to an embodiment of the present invention.

Figure 5 is a side view in elevation of the airbag arrangement of Fig. 2.

Figure 6 is atop plan of an airbag arrangement for a passenger side airbag according to an embodiment of the present invention.

Figure 7 is atop plan view of an airbag module and airbag arrangement according to any embodiment of the present invention.

Figure 8 is atop plan view of an airbag module and airbag arrangement according to an embodiment of the present invention.

Figure 9 is a top plan view of an airbag module and airbag arrangement according to an embodiment of the present invention.

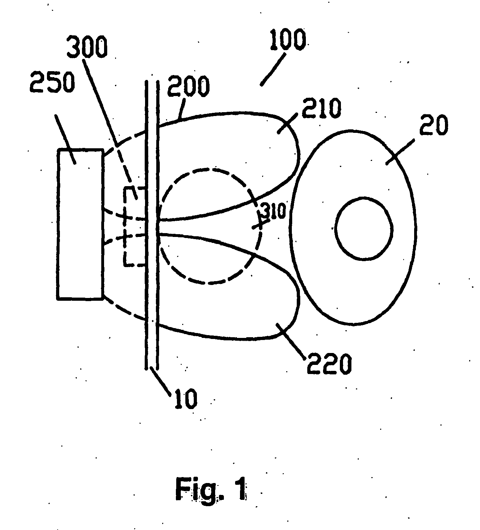

As shown in Fig. 1, according to an embodiment of the present invention an airbag system 100 for a vehicle passenger 20 is provided. The system 100 may include a "twin" airbag 200 that includes a left airbag 220 and a right airbag 210. The twin airbag 200 deploys from an airbag module 250 that includes at least one gas generator or inflator. The airbag module may be positioned behind the instrument panel 10 or other suitable location.

The system 100 also includes a support airbag 310 positioned to deploy between the left and right airbags 220, 210. As shown in Fig. 1, the support airbag 310 may deploy from a airbag module 300 located behind the instrument panel 10. However, according to an alternative embodiment, the support airbag may deploy from the same airbag module 250 as the left and right airbags 220, 210.

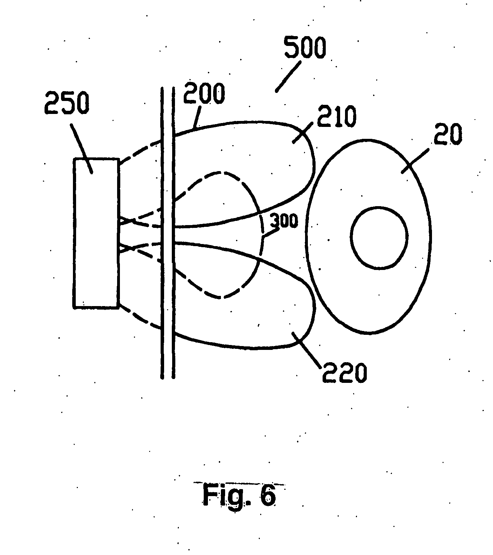

Fig. 6 discloses another alternative embodiment of an airbag system 500 for protecting the vehicle passenger 20. The airbag system 500 includes the twin airbag 200 and the support airbag 310. Both the twin airbag 200 and the support airbag 310 deploy from the same airbag module 250.

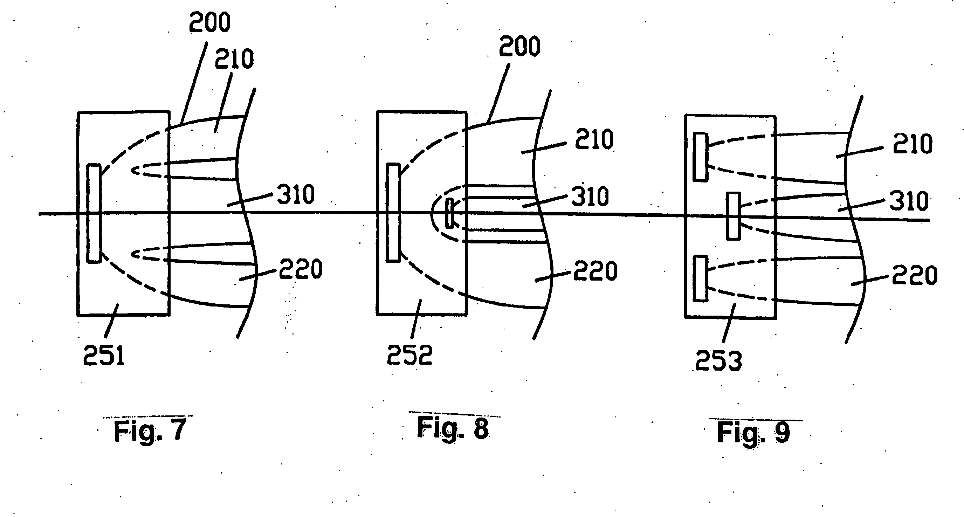

Figs. 7-9 disclose possible alternative arrangements of the twin and support airbags of Fig. 6. For example, Fig. 7 discloses an airbag arrangement in which the twin airbag 200 and the support airbag 310 are integrally formed and deploy from the same airbag module 251. Fig. 8 discloses an alternative arrangement wherein the twin airbag 200 and the support airbag 310 are separate and distinct airbags that deploy from the same airbag module 252. Fig. 9 discloses an arrangement in which the left and right airbags of the twin airbag 220, 210 are separate and distinct from each other and also from the support airbag 310. According to the embodiment shown in Fig. 9, all three airbags deploy from the same airbag module 253.

The scope of the present invention includes further alternatives such as, for example, providing a separate inflator or gas generator for each airbag or airbag portion. Alternatively, one or two inflators may be used to inflate the various airbags included in the system.

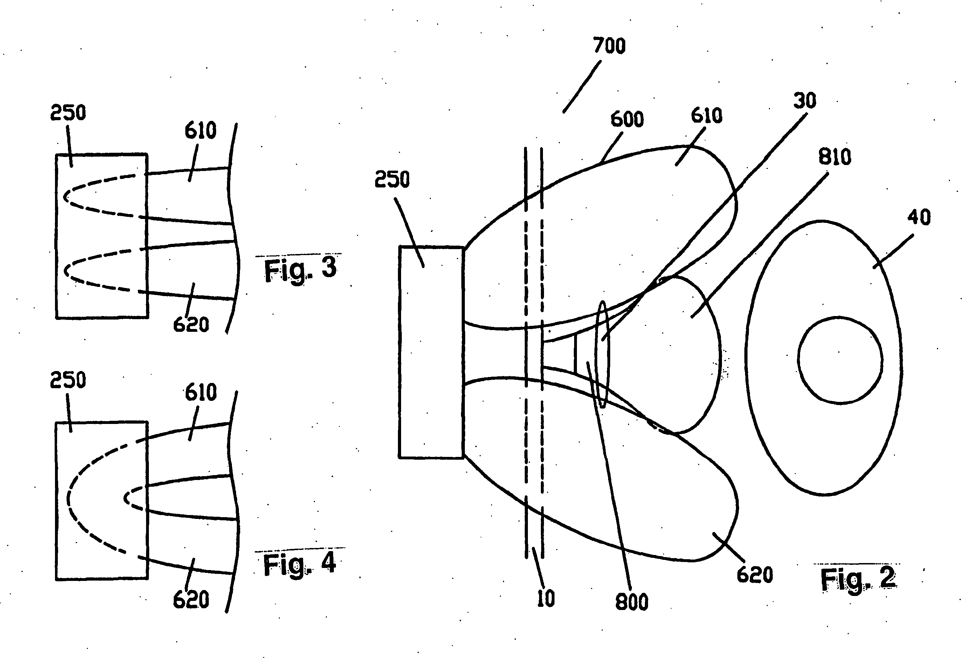

As described further below, with regard to Figs. 3 and 4, the twin airbag 200 included in the airbag system 100 of Fig. 1 may include left and right airbags 220, 210 that are either separate or integrally formed.

As shown in Fig. 2, according to an embodiment of the present invention an airbag system 700 for a vehicle driver 40 is provided. The system 700 may include a twin airbag 600 that includes a left airbag 620 and a right airbag 610. The twin airbag 600 deploys from an airbag module 250 that includes at least one gas generator or inflator. The airbag module may be positioned behind the instrument panel 10 or other suitable location.

The system 700 also includes a support airbag 810 positioned to deploy between the left and right airbags 620, 610. As shown in Fig. 2, the support airbag 810 may deploy from a airbag module 800 located in a steering wheel 30. However, according to an alternative embodiment, the support airbag 810 may deploy from the same airbag module 250 as the left and right airbags 620, 610. Thus, the scope of the present invention includes providing an arrangement such as shown in Fig. 6, for protecting the driver 40. Similarly, the arrangements disclosed in Figs. 7-9 may be employed with a driver side system such as disclosed in Fig. 2.

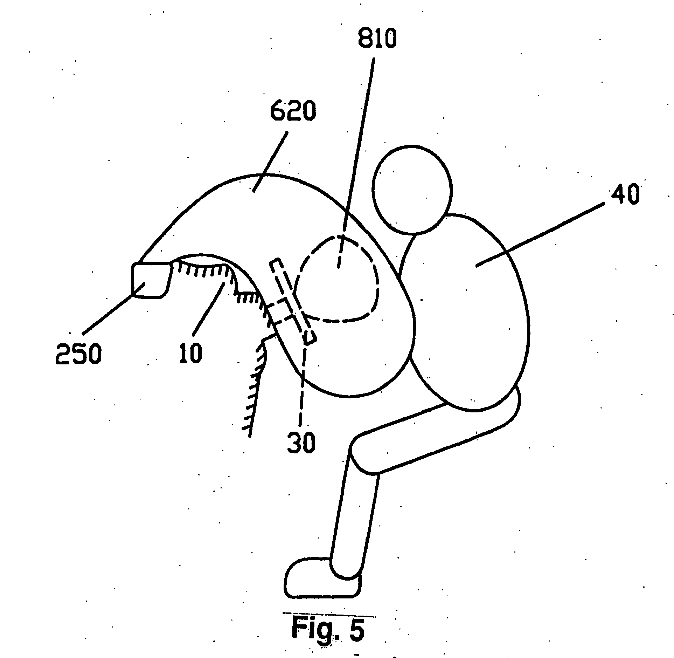

Fig. 5 discloses a side view of the system 700 of Fig. 2. As shown in Fig. 5, the twin airbag 600 and support airbag 810 deploy to protect the driver from contact with the steering wheel 30, the instrument panel 10 or the vehicle windshield. When fully inflated, the twin airbag 600 is larger than the support airbag 810.

Figs. 3 and 4 disclose alternative arrangements for the twin airbag 600. For example, the twin airbag 600 may include left and right airbags 620, 610 that are either separate or integrally formed.

The airbag systems included in the scope of the present invention may include a controller (ECU) for controlling the airbag deployment. The ECU may receive inputs from various sensors and systems for determining the condition and position of the various occupants of the vehicle, including the driver and the passenger.

For example, the scope of the present invention includes detecting the status of the vehicle occupants using a seat weight sensor, a MSB, a sensor for measuring the pulled out length of a seat belt webbing, a proximity sensor (e.g., capacitance type), a CCD camera, an optical sensor, an ultrasonic type sensor, a magnetic field sensor, a 3D scan system, an acceleration system or any other sensor that can detect the status of the occupant.

The ECU also may receive inputs from other sensors and/or systems to determine the status of the vehicle and the conditions in which the vehicle is operating. For example, the ECU may receive additional input from a precrash sensor, a front or side impact sensor, a MSB, a proximity sensor, an acceleration sensor, a GPS navigation system, a system for monitoring the conditions outside the vehicle such as weather or lighting (e.g., day or night conditions); or any other sensor or system that may be suitable for detecting conditions affecting the vehicle such as an approaching object, vehicle or pedestrian.

Exemplary operations of the airbag systems will now be described. The passenger airbag systems may be configured to operate as follows.

When a small sized passenger such as a 5 percentile adult female is positioned as the front seat passenger (or when the passenger is sitting too close to the dashboard) only the twin airbag 200 will deploy. The support airbag 310 will not deploy.

When a standard or middle sized passenger such as a 50 percentile adult male is positioned as the front seat passenger, both the twin airbag 200 and the support airbag 310 will deploy. The inflation amount of the twin airbag 200 can be adjusted according to the sitting position and size of the passenger using, for example, a staged inflator or inflation system.

When a large sized passenger such as a 95 percentile adult male is sitting, the twin airbag 200 and the support airbag 310 deploy fully.

The driver side airbag arrangement may be configured to operate as follows.

When a small sized passenger such as a 5 percentile adult female is positioned as the front seat passenger (or when the driver is sitting too close to the steering wheel) only the twin airbag 600 will deploy. The support airbag 810 will not deploy.

When a standard or middle sized driver such as a 50 percentile adult male is positioned as the front seat passenger, both the twin airbag 600 and the support airbag 810 will deploy. The inflation amount of the twin airbag 600 can be adjusted according to the sitting position and size of the driver using, for example, a staged inflator or inflation system.

When a large sized passenger such as a 95 percentile adult male is sitting, the twin airbag 600 and the support airbag 810 deploy fully.

The scope of the present invention includes various other suitable combinations of the aforementioned deployment and operational arrangements.

The airbag systems and arrangements described above may be used in conjunction with other safety systems, such as, for example, MRS, MSB, side curtain airbags, side airbags, airbelts, knee bags, seat cushion airbags, etc.

The different variations of the present invention described may be applied to the various embodiments shown in the drawings and described herein. For example, as described above, although not shown in Fig. 2, the present invention includes an airbag system for protecting the driver of the vehicle in which the support airbag 810 and the twin airbag 600 are stored and deploy from the same module such as shown, for example, in Fig. 6.

## Claims

1. An airbag system designed to be mounted in front of a seat for a vehicle occupant, comprising:
a twin airbag (200; 600) having left and right portions (220, 210; 620, 610) that are configured to deploy alongside a support airbag (310; 810), said support airbag (310; 810) being configured to deploy between the left and right portions of the twin airbag,
said airbag system being **characterized by**:
a controller for controlling airbag deployment depending on the condition and position of the occupant(s) and the status of the vehicle, wherein
the fully inflated twin airbag is larger than the support airbag and
the inflation amount of the twin airbag can be adjusted separately from the inflation amount of the support airbag.

2. The airbag system of claim 1, wherein the twin airbag is folded and stored in a first airbag module positioned in an instrument panel of a vehicle.

3. The airbag system of claim 2, wherein the support airbag is folded and stored in a second airbag module located in the instrument panel of the vehicle.

4. The airbag system of claim 2, wherein the support airbag is folded and stored in the first airbag module.

5. The airbag system of claim 1 or 2, wherein the support airbag is folded and stored in an airbag module located in a steering wheel.

## Patentansprüche

1. Airbagsystem, das für eine Montage vor einem Sitz eines Fahrzeuginsassen ausgelegt ist, mit:
einem Doppelairbag (200; 600) mit linken und rechten Abschnitten (220, 210; 620, 610), die zur Entfaltung entlang eines Abstützairbags (310; 810) konfiguriert sind,
wobei der Abstützairbag (310; 810) zur Entfaltung zwischen den linken und rechten Abschnitten des Doppelairbags konfiguriert ist,
wobei das Airbagsystem **gekennzeichnet ist, durch**:
eine Steuerung zur Steuerung der Airbagentfaltung in Abhängigkeit von dem Zustand und der Position des bzw. der Insassen und dem Zustand des Fahrzeugs, wobei
der vollständig aufgeblasene Doppelairbag größer als der Abstützairbag ist, und
der Aufblasungsgrad des Doppelairbags getrennt von dem Aufblasungsgrad des Abstützairbags angepasst werden kann.

2. Airbagsystem nach Anspruch 1, wobei der Doppelairbag in einem ersten Airbagmodul gefaltet und gelagert ist, das in einer Instrumententafel eines Fahrzeugs positioniert ist.

3. Airbagsystem nach Anspruch 2, wobei der Abstützairbag in einem zweiten Airbagmodul gefaltet und gelagert ist, das in der Instrumententafel eines Fahrzeugs positioniert ist.

4. Airbagsystem nach Anspruch 2, wobei der Abstützairbag in dem ersten Airbagmodul gefaltet und gelagert ist.

5. Airbagsystem nach Anspruch 1 oder 2, wobei der Abstützairbag in einem in einem Lenkrad befindlichen Airbagmodul gefaltet und gelagert ist.

## Revendications

1. Système d'airbag destiné à être monté à l'avant du siège d'un occupant d'un véhicule comprenant:
■ un airbag jumeau (200 ; 600) comportant des parties gauches et droites (220, 210 ; 620, 610) configurées de manière à se déployer le long d'un airbag de support (310 ; 810), ledit airbag de support (310 ; 810) étant configuré de manière à se déployer entre les parties gauches et droites de l'airbag jumeau,
■ ledit système d'airbag étant **caractérisé par** :
■ une commande permettant de commander le déploiement de l'airbag en fonction de la condition et de la position du ou des occupant(s) et du statut du véhicule, dans lequel
■ l'airbag jumeau totalement gonflé est plus grand que l'airbag de support et
■ le volume de gonflement de l'airbag jumeau peut être ajusté séparément du volume de gonflement de l'airbag de support.

2. Système d'airbag selon la revendication 1, dans lequel l'airbag jumeau est plié et stocké dans un premier module d'airbag situé dans le tableau de bord d'un véhicule.

3. Système d'airbag selon la revendication 2, dans lequel l'airbag de support est plié et stocké dans un second module d'airbag situé dans le tableau de bord d'un véhicule.

4. Système d'airbag selon la revendication 2, dans lequel l'airbag de support est plié et stocké dans le premier module d'airbag.

5. Système d'airbag selon la revendication 1 ou 2, dans lequel l'airbag de support est plié et stocké dans un module d'airbag situé dans le volant.
